# EUROPEAN PATENT APPLICATION

(11) **EP 3 760 317 A1**
(43) Date of publication of application: **06.01.2021**
(21) Application number: 19784570.4
(22) Date of filing: 06.03.2019
(51) Int. Cl.: B03C 3/10, B03C 3/47, B03C 3/74

(54) **DUST COLLECTION PLATE OF MOBILE ELECTRODE-TYPE ELECTRIC DUST COLLECTOR, AND MOBILE ELECTRODE-TYPE ELECTRIC DUST COLLECTOR**

(30) Priority: 13.04.2018 JP 2018077683
(71) Applicant: Mitsubishi Power Environmental Solutions, Ltd., Naka-ku Yokohama-Shi, Kanagawa 231-0062 (JP)
(72) Inventor: ORITA Keigo, Yokohama-Shi, Kanagawa 231-0062 (JP); YUKI Akio, Yokohama-Shi, Kanagawa 231-0062 (JP); OKAMOTO Norihito, Yokohama-Shi, Kanagawa 231-0062 (JP)
(74) Representative: Hoffmann Eitle
(86) International application number: PCT/JP2019/008949
(87) International publication number: WO 2019/198391

(57) **Abstract**

The purpose of the present invention is to provide a collecting electrode plate of a moving electrode-type electrostatic precipitator and a moving electrode-type electrostatic precipitator that are capable of reducing weight by simplifying a structure while securing rigidity of the collecting electrode plate. There is disclosed a collecting electrode plate (4) of a moving electrode-type electrostatic precipitator. The moving electrode-type electrostatic precipitator includes a discharge electrode to which a voltage is applied, a collecting electrode including a plurality of collecting electrode plates (4) elongated in one direction and installed to face the discharge electrode, and an endless chain connected to the plurality of collecting electrode plates (4) to move the plurality of collecting electrode plates (4). the collecting electrode plate (4) of the moving electrode-type electrostatic precipitator includes two first frame materials (13) installed in parallel in a transverse direction perpendicular to a longitudinal direction, one second frame material (14) connected to the first frame materials (13) on both end sides of the second frame material (14), and a plate material (10) bent at an end portion in the transverse direction, disposed on both surfaces of the second frame material (14), and joined to the second frame material (14).

## Description

### Technical Field

The present invention relates to a collecting electrode plate of a moving electrode-type electrostatic precipitator, and a moving electrode-type electrostatic precipitator.

### Background Art

In the moving electrode-type precipitator, dust is charged by corona discharge generated by applying a high voltage to a discharge electrode while a collecting electrode plate constituting the collecting electrode moves in a vertical direction and rotates around the discharge electrode, and the dust is collected by the collecting electrode. A brush is installed in a lower portion of the collecting electrode, and the brush brushes off dust adhering to the collecting electrode plate.

Compared with a hammering method in which a hammer strikes a collecting electrode plate in a fixed electrode-type precipitator, the brushing off by a brush in a moving electrode-type precipitator can reduce a separation failure of dust and scattering of dust to downstream, and can improve dust collection performance.

On the other hand, since the moving electrode-type precipitator includes a driving apparatus configured to move the collecting electrode plate, the cost tends to be higher than that of the fixed electrode-type precipitator. Therefore, it is required to simplify the structure and reduce the manufacturing cost.

### Citation List

### Patent Document

Patent Document 1: JP 2014-188383 A

### Summary of Invention

### Technical Problem

Collecting electrode plates of a moving electrode-type precipitator are long in the horizontal direction and a plurality of collecting electrode plates are disposed in the vertical direction. Endless chains are provided at both ends (left and right ends) of the collecting electrode plate in the horizontal direction, and the collecting electrode plate is supported by the endless chains. Sprocket wheels engaged with the endless chains are disposed at the upper and lower ends of the moving electrode-type precipitator, and the endless chains are wound around two sprocket wheels. While the collecting electrode plate moves along the sprocket wheels disposed at the upper end or the lower end, the installation direction changes from the vertical direction to the horizontal direction, and then to the vertical direction again. As a result, the upper end side and the lower end side of the collecting electrode plate are reversed. Since the collecting electrode plate is in a horizontal posture during the reversing operation, deflection deformation occurs due to the weight of the collecting electrode plate or the weight of the adhering dust. Therefore, conventionally, a collecting electrode plate having a hollow box structure is used so that the collecting electrode plate itself does not cause plastic deflection deformation or buckling.

When a collecting electrode plate having a hollow box structure is formed, as illustrated in FIGS. 12 and 13, the collecting electrode plate 50 is formed by combining a frame 51 and a plate material 52. When there is a projection on a surface of the plate material 52, a spark is generated, and when a size of a step or a groove is large, the dust is not sufficiently brushed off by the brush, so that the plate surface of the collecting electrode plate 50 is required to be smooth. As illustrated in FIG. 14, when there is a gap between joined portions W of the frame 51 and the plate material 52, there is a possibility that dust enters the inside of the collecting electrode plate 50 when the dust is brushed off by the brush.

When the dust enters and accumulates inside the collecting electrode plate, the weight of the collecting electrode plate increases, which causes deformation of the collecting electrode plate itself and deterioration of the endless chain, thereby shortening the life. When the collecting electrode plate is turned upside down, when the dust entering the inside of the collecting electrode plate moves together in the collecting electrode plate, an impact load may be generated when the dust hits the inner wall of the collecting electrode plate. As a result, the impact load may be transmitted to the endless chain to break the chain.

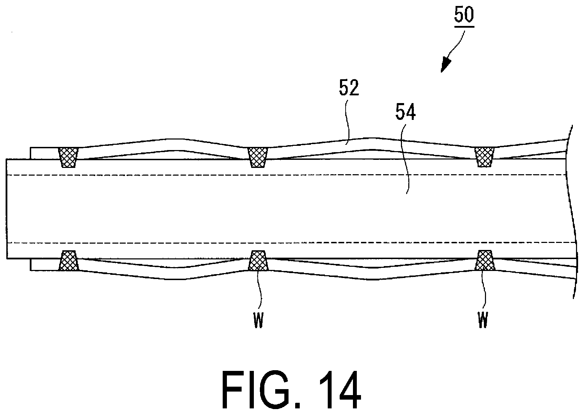

In order to reduce the weight of the collecting electrode plate 50, it is considered that the thickness of the plate material 52 may be reduced. However, it has been found that when the plate material 52 having a thickness of 0.6 mm or less is actually fixed to a first frame material 53 or a second frame material 54 of the frame 51 by spot welding at regular intervals, the plate material 52 is bent due to a temperature rise during welding as illustrated in FIG. 14. As a result, it has been found that a gap into which dust enters is formed between the joined portions W. Therefore, in the conventional hollow box structure, it is difficult to reduce the weight of the collecting electrode plate by thinning the plate material.

Patent Document 1 discloses that two steel plates are directly joined by spot welding at upper and lower end portions, and a substantially triangular sealing plate is inserted into a side surface of the collecting electrode plate. However, in the case of this shape, only the steel plates are overlapped at the upper and lower end portions of the collecting electrode plate, and there is a problem that the rigidity is low and the collecting electrode plate is easily bent. It is necessary to newly manufacture a sealing plate having a substantially triangular shape, and the effect of reducing the manufacturing cost is reduced.

The present invention has been made in view of the above circumstances, and an object of the present invention is to provide a collecting electrode plate of a moving electrode-type electrostatic precipitator and a moving electrode-type electrostatic precipitator that are capable of achieving weight reduction by simplifying a structure while securing rigidity of the collecting electrode plate.

### Solution to Problem

In order to solve the above problems, the collecting electrode plate of the moving electrode-type electrostatic precipitator and the moving electrode-type electrostatic precipitator of the present invention employ the following means.

That is, there is disclosed a collecting electrode plate of a moving electrode-type electrostatic precipitator according to an aspect of the present invention. The moving electrode-type electrostatic precipitator includes a discharge electrode to which a voltage is applied, a collecting electrode including a plurality of collecting electrode plates elongated in one direction and installed to face the discharge electrode, and an endless chain connected to the plurality of collecting electrode plates to move the plurality of collecting electrode plates. The collecting electrode plate of the moving electrode-type electrostatic precipitator includes two first frame materials installed in parallel in a transverse direction perpendicular to a longitudinal direction, one second frame material connected to the first frame materials on both end sides of the second frame material, and a plate material bent at an end portion in the transverse direction, disposed on both surfaces of the second frame material, and joined to the second frame material.

According to this configuration, the moving electrode-type electrostatic precipitator includes a discharge electrode and a collecting electrode, where a corona discharge is generated by applying a voltage to the discharge electrode, and dust (particulate material) charged by the corona discharge is collected on the collecting electrode. The collecting electrode includes a plurality of collecting electrode plates elongated in one direction, and the collecting electrode plates are moved by an endless chain connected to the collecting electrode plates. In the collecting electrode plate, a frame of the collecting electrode plate is constituted by two first frame materials and one second frame material, and a plate material is joined to the frame. The two first frame materials are installed in parallel in the transverse direction perpendicular to the longitudinal direction, and the one second frame material is connected to the first frame materials on both end sides of the second frame material. The plate material is disposed on both surfaces of the second frame material while being bent at an end portion in the transverse direction of the collecting electrode plate, and is joined to the second frame material.

Since the plate material of the collecting electrode plate is supported by the two first frame materials and the one second frame material, the weight can be reduced as compared with a case where the frame is configured by installing two or more members connected to the first frame material at both ends of the members. Since the plate material is bent at the end portion in the transverse direction of the collecting electrode plate and is disposed on both surface sides of the second frame material, the rigidity of the collecting electrode plate is ensured.

In the above-described invention, the collecting electrode plate of the moving electrode-type electrostatic precipitator may further include a connecting member provided in the first frame material being parallel to the longitudinal direction and protruding outward, and connected to the endless chain, and a guide member provided in the first frame material at a position spaced apart from the connecting member being parallel to the longitudinal direction and protruding outward, and being capable of coming into contact with an anti-vibration plate provided on the endless chain.

According to this configuration, the connecting member is provided on the first frame material in parallel to the longitudinal direction and protruding outward, and the frame of the collecting electrode plate is connected to the endless chain by interposing the connecting member and is movable by the endless chain. Since the guide member is provided on the first frame material in parallel to the longitudinal direction and protruding outward, and the guide member can be brought into contact with the anti-vibration plate provided on the endless chain, the guide member can be brought into contact with the anti-vibration plate to suppress the swing of the collecting electrode plate.

In the above-described invention, a plurality of the plate materials may be overlapped or abutted at a joined portion with the second frame material.

According to this configuration, in a case where a plurality of plate materials are overlapped at the connection portion where the plate material and the second frame material are joined, the direction of the end surface of the plate material disposed at the outermost portion is set to be the same as the direction in which the dust is brushed off by the brush, and thus it is possible to prevent the dust from entering the inside of the collecting electrode plate. In the case where a plurality of plate materials are abutted against each other, it is possible to prevent dust from entering the inside of the collecting electrode plate by reducing the gap generated at the abutting portion.

In the above-described invention, the plate material may be bent at at least two positions at an end portion in the transverse direction.

According to this configuration, it is possible to further increase the rigidity of the collecting electrode plate compared to a case where the plate material is bent at one position at the end portion in the transverse direction.

A moving electrode-type electrostatic precipitator according to an aspect of the present invention includes the collecting electrode plate of the moving electrode-type electrostatic precipitator described above.

In the above invention, the moving electrode-type electrostatic precipitator may further include a brush in contact with a surface of the collecting electrode plate. In the collecting electrode plate, a plurality of the plate materials are overlapped at a joined portion with the second frame material, and a direction of an end surface of the plate material disposed at an outermost portion may be the same as a direction in which the brush brushes off dust.

### Advantageous Effects of Invention

It is possible to reduce the weight by simplifying the structure while ensuring the rigidity of the collecting electrode plate.

### Brief Description of Drawings

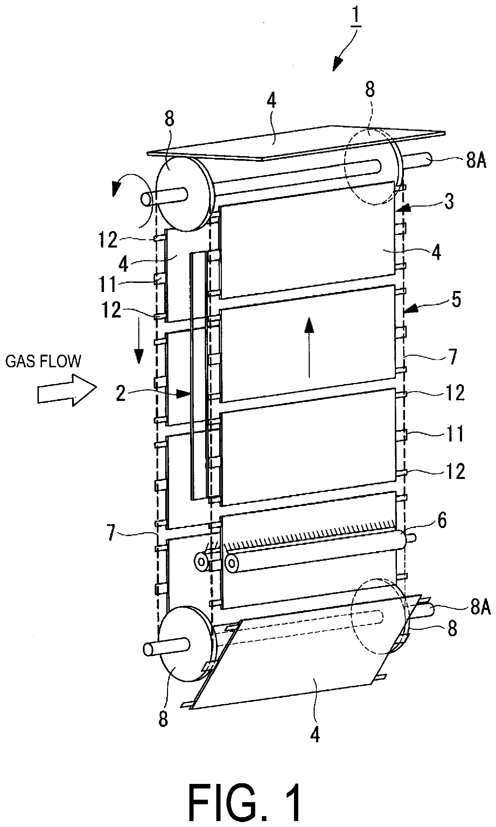

FIG. 1 is a perspective view illustrating a moving electrode-type electrostatic precipitator according to an embodiment of the present invention.

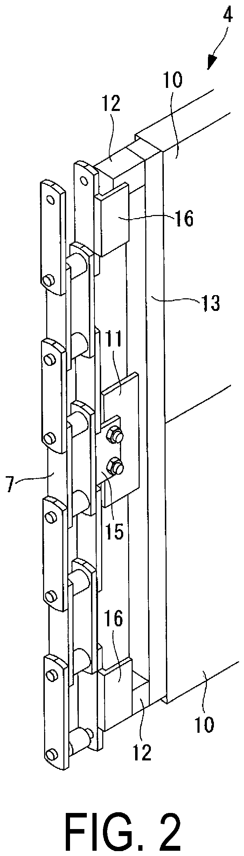

FIG. 2 is a partially enlarged perspective view illustrating a collecting electrode plate and an endless chain, of the moving electrode-type electrostatic precipitator, according to an embodiment of the present invention.

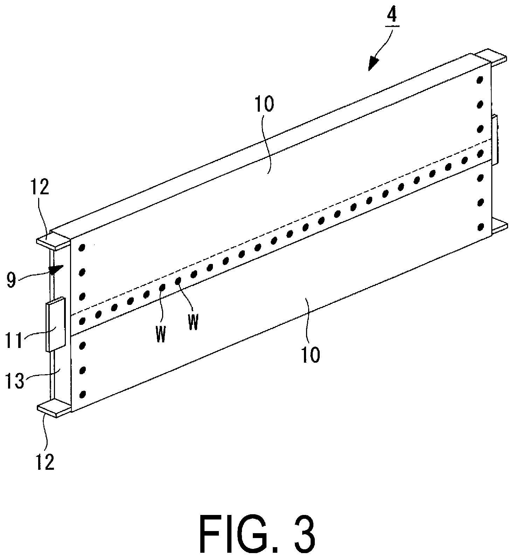

FIG. 3 is a perspective view illustrating a collecting electrode plate of a moving electrode-type electrostatic precipitator according to an embodiment of the present invention.

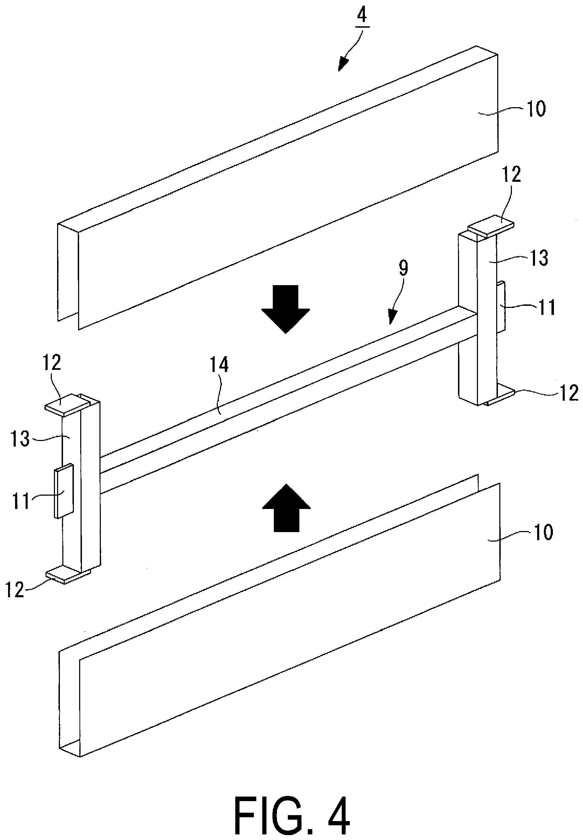

FIG. 4 is an exploded perspective view illustrating a collecting electrode plate of a moving electrode-type electrostatic precipitator according to an embodiment of the present invention.

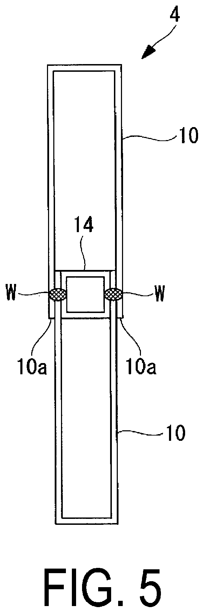

FIG. 5 is a vertical cross-sectional view illustrating a collecting electrode plate of a moving electrode-type electrostatic precipitator according to an embodiment of the present invention.

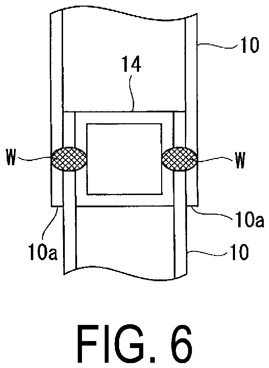

FIG. 6 is a partially enlarged vertical cross-sectional view illustrating a collecting electrode plate of a moving electrode-type electrostatic precipitator according to an embodiment of the present invention.

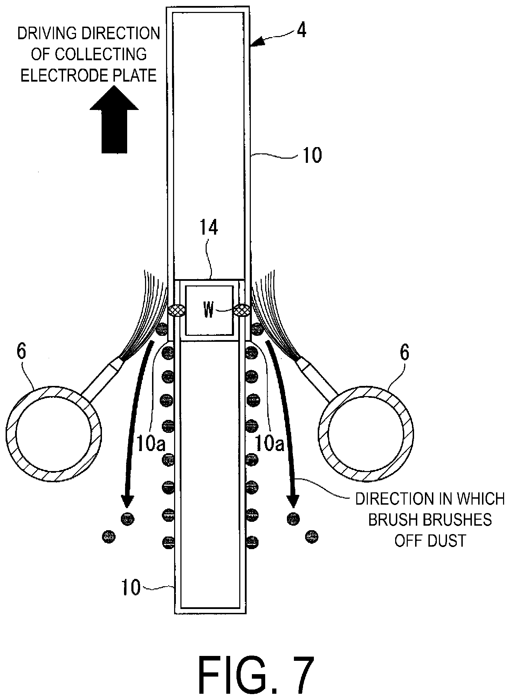

FIG. 7 is a vertical cross-sectional view illustrating a collecting electrode plate and a brush, of a moving electrode-type electrostatic precipitator according to an embodiment of the present invention.

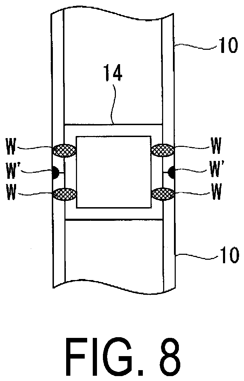

FIG. 8 is a partially enlarged vertical cross-sectional view illustrating a first modified example of the collecting electrode plate of the moving electrode-type electrostatic precipitator according to an embodiment of the present invention.

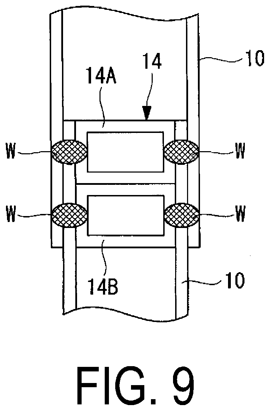

FIG. 9 is a partially enlarged vertical cross-sectional view illustrating a second modified example of the collecting electrode plate of the moving electrode-type electrostatic precipitator according to an embodiment of the present invention.

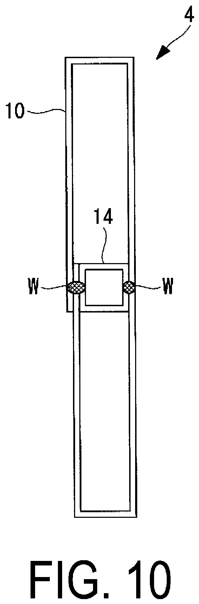

FIG. 10 is a vertical cross-sectional view illustrating a third modified example of the collecting electrode plate of the moving electrode-type electrostatic precipitator according to an embodiment of the present invention.

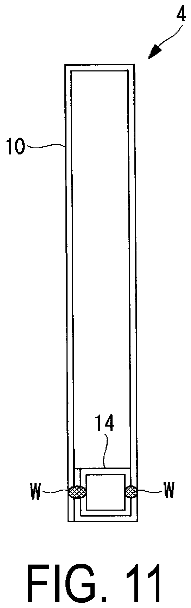

FIG. 11 is a vertical cross-sectional view illustrating a fourth modified example of the collecting electrode plate of the moving electrode-type electrostatic precipitator according to an embodiment of the present invention.

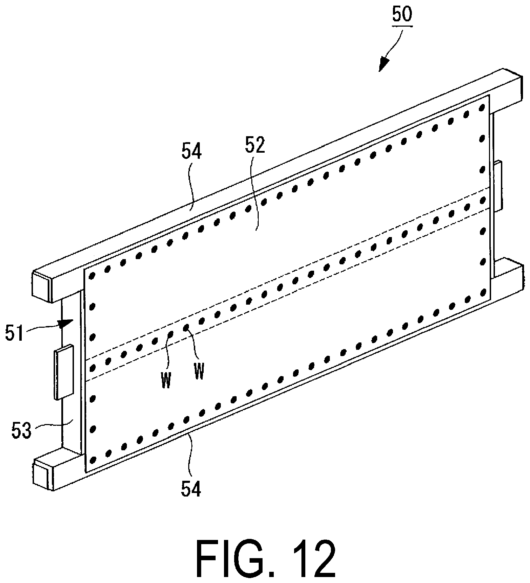

FIG. 12 is a perspective view illustrating a collecting electrode plate of a conventional moving electrode-type electrostatic precipitator.

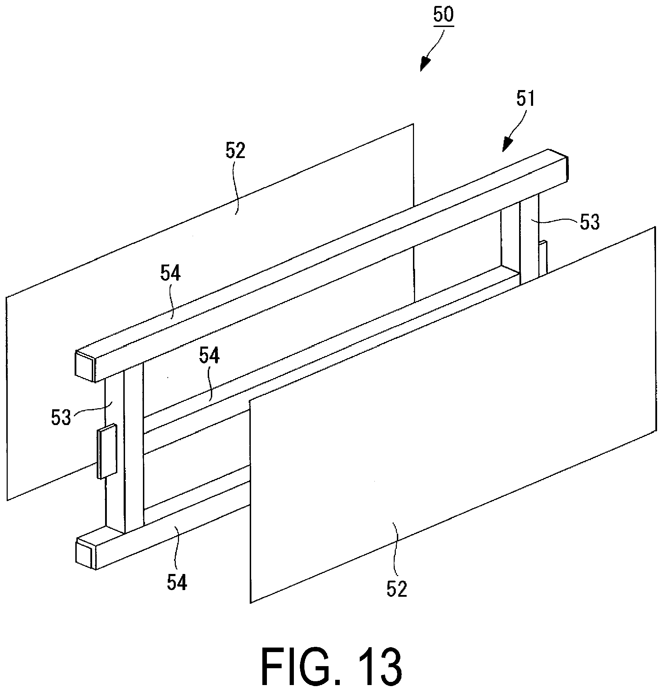

FIG. 13 is an exploded perspective view illustrating a collecting electrode plate of a conventional moving electrode-type electrostatic precipitator.
FIG. 14 is a plan view illustrating a collecting electrode plate of a conventional moving electrode-type electrostatic precipitator.

### Description of Embodiments

Hereinafter, a moving electrode-type electrostatic precipitator 1 according to an embodiment of the present invention will be described with reference to the drawings.

The moving electrode-type electrostatic precipitator 1 is installed in an exhaust gas treatment facility provided in a flue on the downstream of an industrial combustion facility such as a thermal power plant or an incinerator. In the moving electrode-type electrostatic precipitator 1, a collecting electrode 3 includes a plurality of movable collecting electrode plates 4, and dust (particulate material) adhering to the surface of the collecting electrode plates 4 is brushed off by a brush 6 provided at lower part. The moving electrode-type electrostatic precipitator 1 may be housed in the same casing as the fixed electrode-type electrostatic precipitator in which the position of the collecting electrode is fixed, and may be arranged in series therewith along the gas flow direction, or may be used alone.

As illustrated in FIG. 1, the moving electrode-type electrostatic precipitator 1 includes a discharge electrode 2, a collecting electrode 3, and a drive mechanism 5 configured to move a collecting electrode plates 4 of the collecting electrode 3, which are disposed in a casing (not illustrated). A plurality of moving electrode-type electrostatic precipitators 1 are disposed and arranged in a horizontal direction and in a direction perpendicular to a gas flow in a casing.

In the casing, for example, a gas inlet and a gas outlet are respectively provided on two side surfaces facing each other, and a gas flow path through which gas flows in a horizontal direction is formed inside. A hopper (not illustrated) for collecting dust, collected by the collecting electrode 3 and brushed off by the brush 6, is provided in a lower portion of the casing.

The discharge electrode 2 includes, for example, a discharge wire, and a plurality of wires are arranged along the gas flow direction. The discharge wires of the discharge electrode 2 are disposed at a position facing the plate surface of the collecting electrode plate 4 of the collecting electrode 3 at a constant interval. As illustrated in FIG. 1, the discharge electrodes 2 include a discharge electrode 2 disposed inside the loop formed by the collecting electrode 3, and a discharge electrode 2 (not illustrated) disposed between the collecting electrodes 3 of the adjacent moving electrode-type electrostatic precipitators 1.

The collecting electrode plate 4 of the collecting electrode 3 is a plate-like member made of metal, and is installed to face the discharge electrode 2. The plate surfaces (front and rear surfaces) of the collecting electrode plate 4 are disposed substantially parallel to the gas flow direction at the gas inlet of the casing.

The discharge wires of the discharge electrode 2 are installed facing the collecting electrode 3 so that the influence range of the corona discharge is appropriately distributed in the collecting electrode plate 4 of the collecting electrode 3. For example, the discharge wires are uniformly disposed in the width direction of the collecting electrode 3 which faces the discharge wires. Since the discharge electrodes 2 are disposed and arranged side by side in the depth direction, the particulate material not captured in the discharge region on the near side can be charged and collected in the discharge region on the far side.

The discharge electrode 2 and the collecting electrode 3 are separated from each other and electrically insulated from each other. The discharge electrode 2 is connected to a high-voltage power supply (not illustrated). When a high voltage is applied to the discharge electrode 2, corona discharge occurs in the discharge electrode 2. The dust contained in the air is charged by the corona discharge, and the charged dust is attracted to the collecting electrode 3 by the Coulomb force and collected on the collecting electrode 3.

The collecting electrode 3 includes a plurality of collecting electrode plates 4, and the plurality of collecting electrode plates 4 are disposed in the vertical direction. The collecting electrode plate 4 has a rectangular shape, and is installed with the long side being along the depth direction and the short side being along the height direction.

The drive mechanism 5 includes an endless chain 7, sprocket wheels 8, and a motor (not illustrated), or the like. Endless chains 7 are provided at both ends (left and right ends) of the collecting electrode plate 4 in the horizontal direction, and the collecting electrode plate 4 is supported by the endless chains 7. A plurality of the collecting electrode plates 4 are disposed along one pair of annular endless chains 7. Sprocket wheels 8 engaged with endless chains 7 are disposed at the upper and lower ends of the collecting electrode 3, and the endless chains 7 are wound around the two sprocket wheels 8. The endless chain 7 may be constituted by a roller chain as illustrated in FIG. 2, or may be constituted by another type of chain, for example, a link chain.

The sprocket wheel 8 on the upper end is connected to the motor by interposing a rotation shaft 8A, and transmits the rotational force of the motor to the endless chain 7. The sprocket wheel 8 on the lower end rotates around a rotation shaft 8A in accordance with the movement of the endless chains 7 engaged with the sprocket wheel 8. The plurality of collecting electrode plates 4 are disposed in two rows in the vertical direction between the sprocket wheels 8 at the upper end and the lower end.

While the collecting electrode plate 4 moves along the outer periphery of the sprocket wheel 8 disposed at the upper end or the lower end, the installation direction changes from the vertical direction to the horizontal direction, and then to the vertical direction again. As a result, the upper end side and the lower end side of the collecting electrode plate 4 are reversed.

A brush 6 capable of contacting the collecting electrode plate 4 is installed in a lower portion of the collecting electrode 3. The brush 6 is disposed from one end side to the other end side in the longitudinal direction of the collecting electrode plate 4 along the longitudinal direction of the collecting electrode plate 4.

As illustrated in FIGS. 1 and 7, the brush 6 is installed so that the bristle tips are directed obliquely upward with respect to the collecting electrode plate 4 moving upward from below. The brush 6 is brought into contact with the moving collecting electrode plate 4 to brush off dust adhering to the surface of the collecting electrode plate 4. The dust brushed off by the brush 6 is collected by a hopper. The brush 6 is not limited to the above-described example, and may be a brush in which bristle tips are disposed in a cylindrical shape and which is rotatable around the axis of the cylindrical brush 6. In this case, the brush 6 is rotated by a motor (not illustrated), and when the collecting electrode 3 moves from the bottom to the top, the brush 6 rotates so as to move from the top to the bottom on the collecting electrode plate 4 side.

Next, the configuration of the collecting electrode plate 4 according to the present embodiment will be described.

As illustrated in FIGS. 3 and 4, the collecting electrode plate 4 has a hollow box structure formed by combining a frame 9 and a plate material 10. As illustrated in FIGS. 1 to 4, a connecting member 11 and a guide member 12 are installed on a side surface of the collecting electrode plate 4. The front view shape of the collecting electrode plate 4 is, for example, a rectangular shape.

As illustrated in FIG. 4, a frame 9 is configured such that two first frame materials 13 installed in parallel to each other and a second frame material 14 installed between the first frame materials 13 are connected by, for example, welding.

The first frame materials 13 and the second frame material 14 are, for example, square steel having a rectangular cross section. The cross-sectional shapes of the first frame materials 13 and the second frame material 14 are not limited to this example, and may be other shapes such as a U-shape. A plurality of shape materials having small cross-sectional areas may be combined to form one first frame material 13 or second frame material 14. FIG. 9 illustrates an example in which two shape materials 14A and 14B having small cross-sectional areas are combined to form one second frame material 14.

A total of two first frame materials 13 are provided at both ends in the longitudinal direction of the collecting electrode plate 4, one for each end, and two first frame materials 13 are installed in parallel to the transverse direction perpendicular to the longitudinal direction of the collecting electrode plate 4.

The second frame material 14 is installed in parallel to the longitudinal direction of the collecting electrode plate 4, and is connected to the first frame material 13 at both ends of the second frame material 14. The second frame material 14 is connected to the middle of the first frame material 13, so that the frame 9 has an H-shape in front view. The installation direction of the second frame material 14 is not limited to the direction parallel to the longitudinal direction of the collecting electrode plate 4, and may be a direction inclined with respect to the longitudinal direction so that the front view shape of the frame 9 has a substantially N-shape in front view. The connection position between the first frame material 13 and the second frame materials 14 is not limited to the middle of the first frame material 13, and may be on the end portion side of the first frame material 13. FIG. 11 illustrates an example in which the second frame material 14 is connected to the lower end portion of the first frame material 13 and is disposed at the lower end of the collecting electrode plate 4.

The plate material 10 is, for example, a steel plate and has a thickness of 0.4 mm to 0.8 mm. The plate material 10 is bent by 90° at each of two positions at one end portion in the transverse direction, and has a U-shaped cross section as illustrated in FIG. 4. As a result, the rigidity of the plate material 10 is increased and the rigidity of the collecting electrode plate 4 is secured, so that a frame material disposed in parallel to the longitudinal direction can be omitted at one end portion in the transverse direction of the plate material 10. Therefore, only one second frame material 14 may be installed as in the present embodiment.

As illustrated in FIG. 3, the inner surface side of the end portion in the transverse direction of the plate material 10 is disposed so as to be butting with or close to the end portion of the first frame material 13. The two plate surfaces, of the plate material 10, facing each other, are disposed along both surfaces of the frame 9, that is, the front surface and the back surface parallel to each other, and are joined to the first frame materials 13 and the second frame material 14, of the frame 9 by spot welding. FIG. 3 illustrates a joined portion W formed by spot welding. The frame 9 and the plate material 10 may be joined by other welding, for example, arc welding, or may be joined by using an adhesive or a screw, or the like, other than welding.

As illustrated in FIGS. 3 to 5, a total of two plate materials 10 are installed for one collecting electrode plate 4, with one plate material provided on each of the upper end side and the lower end side of the collecting electrode plate 4. In this case, as illustrated in FIGS. 5 to 7, the two plate materials 10 are overlapped with each other at a joined portion W with the second frame material 14. As illustrated in FIG. 7, it is desirable that the direction of the end surface 10a of the plate material 10 disposed at the outermost portion is the same as the direction in which the brush 6 brushes off dust. Thus, even when distortion is generated in the plate material 10 by spot welding or the like and a gap is generated between the adjacent joined portions W, the intrusion of dust into the collecting electrode plate 4 can be prevented.

The number of the plate materials 10 being disposed is not limited to two in total for one collecting electrode plate 4. For example, as illustrated in FIG. 10, when the second frame material 14 is connected to the middle of the first frame material 13, the one plate material 10 may be bent at the upper end side and the lower end side, both surfaces of the frame 9 may be covered with the one plate material 10, and the end portions of the one plate material 10 may be overlapped with each other. As illustrated in FIG. 11, when the second frame material 14 is connected to the first frame material 13 on the lower end side, the one plate material 10 may be bent on the upper end side, and both surfaces of the frame 9 may be covered with the one plate material 10. In either case, the frame 9 and the plate material 10 are joined by spot welding, for example.

The plate material 10 may be bent at one position at one end portion in the transverse direction so that the upper side or the lower side of the side surface of the collecting electrode plate 4 has an isosceles triangular shape. Even when the plate material 10 is bent at only one position at one end portion in the transverse direction, the rigidity is higher than that in the case where two plate materials are directly joined at the one end portion by spot welding (see Patent Document 1). The plate material 10 may be bent at three or more positions at one end portion in the transverse direction to have a polygonal shape, or may have a curved shape such as a semicircular shape.

In the above-described example, as illustrated in FIGS. 5, 10, and 11, the end portions of the plate materials 10 are overlapped with each other, and the overlapped portions are joined to the second frame material 14 by spot welding, but one aspect of the present invention is not limited to this example. As illustrated in FIG. 8, the end surfaces of the plate materials 10 may be abutted against each other in the second frame material 14 without overlapping the end portions of the plate materials 10, and spot welding may be performed on both the end portions of the two plate materials 10. The intrusion of dust into the collecting electrode plate 4 can be prevented by reducing the gap generated at the abutting portion. In this case, the abutting portions of the end surfaces may be welded in a straight line parallel to the longitudinal direction to close the gap between the plate materials 10 and the second frame material 14. FIG. 8 illustrates a straight welded portion W'. In a case where the end surfaces of the plate materials 10 are abutted against each other in the second frame material 14, the present invention is not limited to the above-described example, and the second frame material 14 and the plate materials 10 may be joined to each other by performing spot welding or the like only on the abutted portions of the end surfaces.

As illustrated in FIG. 2, a connecting member 11 is a plate-shaped member and is connected to the connecting member 15 of the endless chain 7 by, for example, bolt coupling. The connecting member 11 is joined to the first frame material 13 by welding at an intermediate portion of the first frame material 13. The connecting members 11 are provided in parallel to the longitudinal direction of the collecting electrode plate 4 and are provided to protrude outward in the two first frame materials 13 provided at both ends in the longitudinal direction. The endless chain 7 is installed with a connecting member 15 for attaching the collecting electrode plate 4 corresponding to the installation position of the collecting electrode plate 4. The connecting member 11 of the collecting electrode plate 4 and the connecting member 15 of the endless chain 7 are connected by bolt coupling, so that the collecting electrode plate 4 is supported by the endless chain 7 and disposed at regular intervals along the endless chain 7.

As illustrated in FIG. 2, the guide member 12 can be brought into contact with an anti-vibration plate 16 provided on the endless chain 7. The guide member 12 is joined to the first frame material 13 by welding at a position of the first frame material 13 spaced apart from the connecting member 11, for example, at the upper end side and the lower end side. The guide members 12 are provided on the two first frame materials 13 provided at both ends in the longitudinal direction to be parallel to the longitudinal direction of the collecting electrode plate 4 and to protrude outward. The guide member 12 may be a shape material having a rectangular cross section as illustrated in FIG. 2, a plate-shaped member as illustrated in FIGS. 3 and 4, a rod material or the like. The endless chain 7 is installed with an anti-vibration plate 16 at a position corresponding to the guide member 12 of the collecting electrode plate 4. The anti-vibration plate 16 is a plate-shaped member provided to protrude from the endless chain 7 toward the collecting electrode plate 4. The guide member 12 is not limited to the example where the guide member 12 is provided at the end portion of the first frame material 13, and may be installed between the end portion and the middle of the first frame material 13 according to the position of the anti-vibration plate 16 of the endless chain 7.

One collecting electrode plate 4 is connected to a pair of endless chains 7 by interposing two connecting members 11. Since the collecting electrode plate 4 is connected to the endless chain 7 at one position in the intermediate portion on the short side, it is possible for the collecting electrode plate 4 to move along with the endless chain 7 along the sprocket wheel 8. On the other hand, since the collecting electrode plate 4 is connected to the endless chain 7 at only one position in the intermediate portion on the short side, the collecting electrode plate 4 is easy to swing about the axis connecting the two connecting members 11. In the present embodiment, since the guide members 12 are provided at both ends in the transverse direction of the collecting electrode plate 4, the guide members 12 come into contact with the anti-vibration plates 16 provided on the endless chain 7, so that the swing range of the collecting electrode plate 4 is limited and the swing of the collecting electrode plate 4 can be suppressed.

As described above, according to the present embodiment, as illustrated in FIG. 4, the plate material 10 of the collecting electrode plate 4 is supported by the two first frame materials 13 and the one second frame material 14. Therefore, it is possible to reduce the weight compared to a case where conventionally as illustrated in FIG. 13, the frame 51 is configured by installing two or more second frame materials 54 connected to the first frame materials 53. Since the plate material 10 is bent at the end portion in the transverse direction of the collecting electrode plate 4 and disposed on both surface sides of the second frame material 14, the rigidity of the collecting electrode plate 4 is secured.

As described above, since the collecting electrode plate 4 can have a simple and lightweight structure, the manufacturing cost of the collecting electrode plate 4 can be reduced. Since the size of the collecting electrode plate 4 according to the present embodiment can be made the same as the size of the conventional collecting electrode plate 4, the collecting electrode plate 4 can be attached to the drive mechanism 5 including the conventional endless chain 7 as it is, and it is easy to modify the existing moving electrode-type electrostatic precipitator.

Further, since the guide member 12 is installed on the collecting electrode plate 4, even when the weight of the collecting electrode plate 4 is reduced, the swing due to the gas flow can be suppressed. When the collecting electrode plate 4 swings, the distance between the discharge electrode 2 and the collecting electrode 3 changes, and by change of the electric field, there is a possibility that the electric dust collecting performance decreases or the dust adhering to the surface scatters. On the other hand, according to the present embodiment, it is possible to prevent poor charging of the dust due to swinging of the collecting electrode plate 4 and re-scattering of the adhering dust.

Furthermore, since the weight of the collecting electrode plate 4 is reduced, the strength and the mass of the drive mechanism 5 and the supporting frame can be reduced, so that the cost of the drive mechanism 5 such as the endless chain 7 can be reduced. Since the wear of the endless chain 7 caused by driving is reduced, the life of the chain can be extended.

### Reference Signs List

- 1: Moving electrode-type electrostatic precipitator
- 2: Discharge electrode
- 3: Collecting electrode
- 4: Collecting electrode plate
- 5: Drive mechanism
- 6: Brush
- 7: Endless chain
- 8: Sprocket wheel
- 8A: Rotation shaft
- 9: Frame
- 10: Plate material
- 10a: End surface
- 11: Connecting member
- 12: Guide member
- 13: First frame material
- 14: Second frame material
- 14A, 14B: Shape material
- 15: Connecting member
- 16: Anti-vibration plate
- 50: Collecting electrode plate
- 51: Frame
- 52: Plate material
- 53: First frame material
- 54: Second frame material

## Claims

1. A collecting electrode plate of a moving electrode-type electrostatic precipitator, the moving electrode-type electrostatic precipitator including:
a discharge electrode to which a voltage being applied; a collecting electrode including a plurality of collecting electrode plates elongated in one direction and installed to face the discharge electrode; and
an endless chain connected to the plurality of collecting electrode plates to move the plurality of collecting electrode plates,
the collecting electrode plate of the moving electrode-type electrostatic precipitator comprising:
two first frame materials installed in parallel in a transverse direction perpendicular to a longitudinal direction;
one second frame material connected to the first frame materials on both end sides of the second frame material; and
a plate material bent at an end portion in the transverse direction, disposed on both surfaces of the second frame material, and joined to the second frame material.

2. The collecting electrode plate of the moving electrode-type electrostatic precipitator according to claim 1, further comprising:
a connecting member provided in the first frame material being parallel to the longitudinal direction and protruding outward, and connected to the endless chain; and
a guide member provided in the first frame material at a position spaced apart from the connecting member being parallel to the longitudinal direction and protruding outward, and being capable of coming into contact with an anti-vibration plate provided on the endless chain.

3. The collecting electrode plate of the moving electrode-type electrostatic precipitator according to claim 1 or 2, wherein
a plurality of the plate materials are overlapped or abutted at a joined portion with the second frame material.

4. The collecting electrode plate of the moving electrode-type electrostatic precipitator according to any one of claims 1 to 3, wherein
the plate material is bent at at least two positions at an end portion in the transverse direction.

5. A moving electrode-type electrostatic precipitator, comprising the collecting electrode plate of the moving electrode-type electrostatic precipitator according to any one of claims 1 to 4.

6. The moving electrode-type electrostatic precipitator according to claim 5, further comprising:
a brush in contact with a surface of the collecting electrode plate,
wherein in the collecting electrode plate, a plurality of the plate materials are overlapped at a joined portion with the second frame material, and a direction of an end surface of the plate material disposed at an outermost portion is the same as a direction in which the brush brushes off dust.
